# EUROPÄISCHE PATENTSCHRIFT

(11) **EP 3 278 046 B1**
(45) Veröffentlichungstag und Bekanntmachung des Hinweises auf die Patenterteilung: **12.12.2018**
(21) Anmeldenummer: 16710938.8
(22) Anmeldetag: 08.03.2016
(51) Int. Cl.: C03B 35/18, C03B 29/08, F27B 9/06, F27B 9/24, F27D 3/06

(54) **VORRICHTUNG ZUR WÄRMEBEHANDLUNG**
HEAT TREATMENT DEVICE
DISPOSITIF DE TRAITEMENT THERMIQUE

(30) Priorität: 31.03.2015 DE 102015104932
(43) Veröffentlichungstag der Anmeldung: 07.02.2018
(73) Patentinhaber: Heraeus Noblelight GmbH, 63450 Hanau (DE)
(72) Erfinder: TITTMANN, Michael, 63454 Hanau (DE); WEBER, Jürgen, 63801 Kleinostheim (DE)
(74) Vertreter: Heraeus IP
(86) Internationale Anmeldenummer: PCT/EP2016/054848
(87) Internationale Veröffentlichungsnummer: WO 2016/155987

(56) Entgegenhaltungen:
- DE-A1-102012 003 030
- US-A- 3 994 711
- US-A- 4 133 667

## Beschreibung

Die Erfindung betrifft eine Vorrichtung zur Wärmebehandlung, umfassend mindestens ein in einem langgestreckten Gehäuse angeordneter Prozessraum mit einer Heizeinrichtung und mit einem Transportsystem zum kontinuierlichen Transport von Behandlungsgut durch den Prozessraum, wobei das Transportsystem zwei parallel in einem Abstand voneinander liegende Endlos-Transportbänder mit einer Vielzahl von den Abstand zwischen den Transportbändern überbrückenden und darauf sich abstützenden Zylindern aus Quarzglas aufweist, auf die das Behandlungsgut zur Wärmebehandlung gelagert ist.

Vorrichtungen in diesem Sinne sind insbesondere zum Erwärmen von Behandlungsgut auf Temperaturen oberhalb von 600 °C geeignet.

### Stand der Technik

In industriellen Elektrowärmeöfen, die zum Erwärmen eines Behandlungsgutes auf Temperaturen oberhalb von 600 °C eingesetzt werden, werden als Heizelemente in der Regel Infrarotstrahler eingesetzt, die mittelwellige und/oder langwellige Infrarotstrahlung emittieren. Die Infrarotstrahler sind vielfach innerhalb des Prozessraumes angeordnet und erzeugen ein homogenes Wärmeprofil.

Für besondere Anforderungen, beispielsweise für Prozesse mit hohen Reinheitsanforderungen, werden Ofenauskleidungen aus Quarzglas eingesetzt, wobei die Infrarotstrahler, die in diesem Fall mit Hüllrohren aus Quarzglas ausgestattet sind, zumindest einen Teil der Auskleidung des Prozessraumes bilden. Eine derartig ausgebildete Prozessraum zur Wärmebehandlung ist beispielsweise aus DE 10 2012 003 030 A1 bekannt. Für einen kontinuierlichen Transport von Behandlungsgut durch den Prozessraum muss dieses jedoch manuell geführt werden.

Aus US 4 133 667 ist ein Durchlaufofen zur Wärmebehandlung von Glasscheiben bekannt. In einem Prozessraum des Durchlaufofens befinden sich als Heizelemente Infrarotstrahler oberhalb und unterhalb der zu behandelnden Glasscheiben. In einem weiteren Prozessraum werden die Glasscheiben von oben und von unten zwecks Kühlung mit Luft angeblasen. Das Transportsystem dieses Durchlaufofens umfasst einen Rollenförderer mit quer zur Förderrichtung angeordneten, zylindrischen Rollen aus Quarzglas, auf denen die Glasscheiben liegend durch den Ofen transportiert werden. Einzelheiten zur Ausgestaltung der Rollen gehen aus US 3 994 711 hervor. Demnach stützen sich die im radialen Querschnitt kreisrund ausgebildeten Rollen an ihren Enden auf zwei metallischen Transportbändern ab, wobei die Rollen durch Reibung mit dem Transportbändern zum Drehen gebracht werden. Die Enden der Rollen haben in dem Abschnitt, der auf den Transportbändern aufliegt, einen gegenüber dem Nenndurchmesser im Bereich der Trägerfunktion der Rollen verringerten Durchmesser. Das Transportsystem ist so ausgelegt, dass die Rollen das auf ihnen liegende Behandlungsgut durch die rotierende Bewegung durch den Ofen transportieren, wobei die Rollen selbst sich nur wenig in Transportrichtung mitbewegen und auf der oberen Ebene des Transportbandes verbleiben, also sich nicht im geschlossenen Umlauf am Transportband befinden.

Es ergibt sich daraus die Problematik, dass bei geringsten Unterschieden in der Geschwindigkeit der Transportbänder die Rollen nicht alle exakt die gleiche Umlaufgeschwindigkeit haben, wodurch es zu unterschiedlicher Abnutzung der Rollen kommt und so insgesamt der Transport gestört werden kann. Außerdem müssen die einzelnen zylindrischen Rollen mit sehr geringen Fertigungstoleranzen in Bezug auf den Durchmesser hergestellt werden, was mit entsprechend hohen Fertigungskosten verbunden ist. Je nach Material, das auf einem solchen Rollenförderer als Behandlungsgut aufliegt, ist überdies eine Schädigung durch die Reibung mit den rotierenden Rollen nicht auszuschließen. Es besteht auch das Risiko eines Partikeleintrags auf das Behandlungsgut und in den Prozessraum hinein durch die Reibung der Rolle auf dem metallischen Transportband. Weiterhin kommt als Nachteil hinzu, dass das Behandlungsgut durch die bewegten Rollen Vibrationen ausgesetzt ist, was den Verfahrensablauf stören kann.

Aus JP 4715019 B2 ist weiterhin ein Transportsystem mit Quarzglas-Rollen für einen Durchlaufofen zur thermischen Behandlung von dünnen Glasscheiben (Displays) bekannt. Die Quarzglas-Rollen sind an einem umlaufenden Transportband gelagert und werden einzeln synchronisiert durch einen Antrieb zum Rollieren gebracht. Die Antriebstechnik ist aufwändig und störanfällig. Außerdem ergibt sich auch hierbei das Risiko von Vibrationen und von Schädigungen am Behandlungsgut durch die Reibung mit den rotierenden Rollen.

### Technische Aufgabenstellung

Der Erfindung liegt die Aufgabe zugrunde, eine Vorrichtung zur Wärmebehandlung mit einem Transportsystem zum kontinuierlichen Transport von Behandlungsgut durch einen Prozessraum bereitzustellen, mit der die Nachteile des Standes der Technik vermieden werden und ein sicherer Betrieb mit Behandlungsgut variabler geometrischer Form, gegebenenfalls auch mit hohem Eigengewicht, ermöglicht und sich durch eine lange Lebensdauer auszeichnet.

### Allgemeine Beschreibung der Erfindung

Diese Aufgabe wird ausgehend von einer Vorrichtung zur Wärmebehandlung mit den eingangs genannten Merkmalen erfindungsgemäß dadurch gelöst, dass die Zylinder als Zwillingsrohre, gebildet von zwei rohrförmigen, durch einen Zwischensteg voneinander getrennten und jeweils eine Längsachse aufweisende Kompartments, ausgeführt und an ihren Enden mit den Transportbändern drehfest verbunden sind.

Im Vergleich zu bekannten Vorrichtungen eines Durchlaufofens mit einem Transportsystem, das Quarzglas-Trägerelemente aus Rundrohren oder Stäben aufweist, zeichnet sich die erfindungsgemäße Modifikation durch wesentlich verbesserte Quarzglas-Trägerelemente aus, nämlich dadurch, dass als Trägerelemente Zwillingsrohre eingesetzt werden, die an ihren Enden mit den Transportbändern drehfest verbunden sind. Zwillingsrohre weisen eine Doppelrohr-Geometrie auf, die von zwei parallelen rohrförmigen Kompartments gebildet werden, die durch einen Zwischensteg getrennt sind. Die Kompartments weisen jeweils eine Längsachse auf. Der radiale Querschnitt der Zwillingsrohre senkrecht zu den parallelen Längsachsen der Kompartments zeigt die Form ähnlich einer Acht. Als Breite eines Zwillingsrohres wird das Außenmaß der beiden Kompartments angegeben, wenn im radialen Querschnitt die beiden Längsachsen in einer Horizontalebene liegen, also die Form einer liegenden Acht zeigen.

Die Zwillingsrohre aus Quarzglas weisen materialbedingt eine hohe Bruchfestigkeit auf, die durch die spezielle Geometrie als Zwillingsrohr noch wesentlich gesteigert wird. Im Vergleich zu Rundrohren aus Quarzglas mit vergleichbaren Wandstärken und Außendurchmesser ist eine wesentliche Steigerung der Flächenbelastbarkeit durch den Einsatz von Zwillingsrohren möglich. Dadurch kann Behandlungsgut mit hohem Eigengewicht sicher auf dem Transportsystem mit Zwillingsrohren durch den Prozessraum zu geführt werden und gleichzeitig hohen Temperatur standhalten.

Aufgrund der drehfesten Lagerung der Zwillingsrohre auf den beiden Transportbändern, werden Vibrationen minimiert; zusätzlich wird Partikelbildung unterbunden, da nicht wie beim Stand der Technik bewegliche Rollen eingesetzt werden. Die erfindungsgemäße Vorrichtung hat daher eine besonders hohe Lebensdauer.

In einer bevorzugten Modifikation der erfindungsgemäßen Vorrichtung ist vorgesehen, dass die Zwillingsrohre auf den Transportbändern derart zu montieren, dass die Längsachsen der Kompartments in einer gemeinsamen Horizontalebene liegen. Auf diese Weise liegt das Behandlungsgut auf der relativ breiten Fläche des Zwillingsrohres auf. Gerade bei kleinteiligem Behandlungsgut ist diese Anordnung der Zwillingsrohre vorteilhaft, insbesondere wenn die Zwillingsrohre in geringem Abstand voneinander an den Transportbändern befestigt sind.

Diese Anordnung der Zwillingsrohre mit ihrer breiten Oberfläche als Tragfläche ist aber auch für Behandlungsgut mit langgestreckter Geometrie gut geeignet, da in diesem Fall der Abstand zwischen den Zwillingsrohren weit gehalten werden kann und bei einer Anordnung der Heizeinrichtung im Prozessraum auch unterhalb des Transportsystems die Hitze auf große Flächen des Behandlungsgutes direkt einwirken kann.

Eine alternative Ausführungsform für die Anordnung der Zwillingsrohre besteht darin, dass die Zwillingsrohre auf den Transportbändern derart montiert sind, dass die Längsachsen in einer gemeinsamen Vertikalebene liegen. Die Kontaktfläche zwischen Behandlungsgut und Zwillingsrohr ist in dieser Anordnung minimiert, was bei einer besonders empfindlichen Oberfläche des Behandlungsgutes von Vorteil ist. Außerdem wird durch diese Montageart der Zwillingsrohre die Höhe, in der das Behandlungsgut den Prozessraum durchläuft, etwas erhöht, ohne dass es hierfür ein Anheben des gesamten Transportsystems bedarf.

Vorteilhafterweise werden die Zwillingsrohre in Klemmfedern gehalten, die jeweils mit einem Transportband verbunden sind. Klemmfedern stellen eine sichere und einfache Befestigungslösung für die Zwillingsrohre dar. Für die Verbindung zu den Transportbändern oder zu einer Transportkette können zusätzlich Winkelelemente eingesetzt werden. Anstelle von Klemmfedern können auch Haltefedern als Befestigungen für die Zwillingsrohre verwendet werden.

Um Behandlungsgut mit besonders hohem Eigengewicht einer Wärmehandlung in der erfindungsgemäßen Vorrichtung zu unterziehen, weisen die Zwillingsrohre bei einer mittleren Wandstärke im Bereich von 1,5 mm bis 2,5 mm und eine hohe Flächenbelastbarkeit auf.

Je nachdem wie die maximale Temperatur des Durchlaufofens eingestellt wird, ist bis zu 90 % der Länge der Zwillingsrohre für die Auflage von Behandlungsgut nutzbar. Entscheidend dabei ist, dass nur ein kleiner Längenabschnitt der Zwillingsrohre für die drehfeste Halterung an den Transportbändern benötigt wird, diese aber in entsprechendem Abstand vom Prozessraum, im kalten Bereich des Gehäuses liegen muss. Die Durchgangsbreite des Transportsystems bzw. die Nutzlänge der Zwillingsrohre kann optimiert werden, so dass die Vorrichtung dafür geeignet ist, durch paralleles Auflegen von Behandlungsgut auf einer großen Durchgangsbreite mit hohem Durchsatz zu arbeiten.

Es hat sich bewährt, wenn die Zwillingsrohre mindestens teilweise eine Beschichtung aus opakem, hoch reflektivem Quarzglas aufweisen. Eine derartige Beschichtung reflektiert die Infrarot-Strahlung der Heizeinrichtung und trägt damit zur Effizienz der Wärmebehandlung bei. Außerdem verhindert die Beschichtung durch ihre Rauigkeit im Vergleich zu der extrem glatten Oberfläche eines unbeschichteten Zwillingsrohres ein Verrutschen des Behandlungsgutes.

Hinsichtlich der Ausgestaltung des Prozessraumes hat er sich bewährt, wenn der Prozessraum eine Auskleidung aus Infrarot-Heizstrahlern mit als Zwillingsrohre ausgebildeten Hüllrohren aus Quarzglas umfasst, die eine dem Prozessraum zugewandte und eine dem Prozessraum abgewandte Seite aufweisen, und die über eine SiO₂-haltige Verbindungsmasse miteinander verbunden sind.

Die SiO₂-haltige Verbindungsmasse dient gleichzeitig als Reflektor und als Verbindungsmittel und ist entweder auf die dem Prozessraum zugewandten Seite des Infrarot-Heizstrahlers oder auf die dem Prozessraum abgewandten Seite aufgebracht.

Zwillingsrohre sind kostengünstig zu fertigen. Sie weisen zwei Hohlräume in Form der Kompartments auf, die zu einer Isolierung der Auskleidung des Prozessraumes beitragen. Durch das Verbinden der Zwillingsrohre mit einer SiO₂-haltigen Verbindungsmasse wird eine Auskleidung des Prozessraumes erhalten, die im Wesentlichen aus Quarzglas besteht. Eine solche Auskleidung weist eine hohe Temperaturbeständigkeit auf. Es ermöglicht hohe Betriebstemperaturen bis zu 1.000 °C.

Die SiO₂-haltige Verbindungsmasse weist eine hohe Temperaturstabilität und Wärmeschockbeständigkeit auf. Dadurch, dass die SiO₂-haltige Verbindungsmasse auf die dem Prozessraum zugewandte Seite des Heizstrahlers aufgebracht ist, wird eine energieeffiziente Wärmebehandlung des Behandlungsgutes ermöglicht. Dabei werden sowohl auftretende Energieverluste minimiert als auch ein Energieeintrag in die Auskleidung des Prozessraumes vermindert, so dass die durch die Heizeinrichtung in den Prozessraum eingebrachte Energie vermehrt zur Wärmebehandlung des Behandlungsgutes zur Verfügung steht.

In einer alternativen Ausführungsform ist vorgesehen, dass die SiO₂-haltige Verbindungsmasse auf die dem Prozessraum abgewandte Seite des Infrarot-Heizstrahlers aufgebracht ist.

Auch eine auf die dem Prozessraum abgewandte Seite aufgebrachte SiO₂-haltige Verbindungsmasse führt zu einer Reduktion auftretender Energieverluste. Dadurch, dass die Beschichtung auf die dem Prozessraum abgewandte Seite des Infrarot-Heizstrahlers aufgebracht ist, wirkt sie als Reflexionsschicht für den Strahler selbst. Sie ist dabei geringeren Temperaturschwankungen ausgesetzt. Im Vergleich zu einer Beschichtung, die auf die dem Prozessraum zugewandte Seite aufgebracht ist, weist eine solche Beschichtung eine höhere Lebensdauer auf.

Vorrichtungen zur Wärmebehandlung mit den vorgenannten Merkmalen finden Verwendung zur Herstellung von Glasbauteilen mit einer Gold-Schicht, insbesondere einer Gold-Reflektorschicht. Glasbauteile dieser Art sind beispielsweise Infrarot-Heizstrahlern mit einer Gold-Reflektorschicht. Eine Vielzahl von derartigen Infrarot-Heizstrahlern kann gleichzeitig die Vorrichtung durchlaufen, wobei ein kontaminationsfreier Transport gewährleistet ist. Auch das Einbrennen von Gold-Dekoren kann unter Verwendung der erfindungsgemäßen Vorrichtung mit hohem Durchsatz und ohne das Risiko des Eintrags von metallischen Fremdpartikeln aus dem Transportsystem durchgeführt werden.

### Ausführungsbeispiel

Nachfolgend wird die Erfindung anhand eines Ausführungsbeispiels und einer Zeichnung näher erläutert. Es zeigt in schematischer Darstellung im Einzelnen:
- **Figur 1**: einen Längsschnitt der erfindungsgemäßen Vorrichtung zur Wärmebehandlung,
- **Figur 2**: einen Querschnitt der erfindungsgemäßen Vorrichtung zur Wärmebehandlung im Bereich des Prozessraumes,
- **Figur 3a**: eine Detailansicht der Halterung der Zwillingsrohre mit Klemmfeder,
- **Figur 3b**: eine Detailansicht der Querschnittsgeometrie eines Zwillingsrohres.

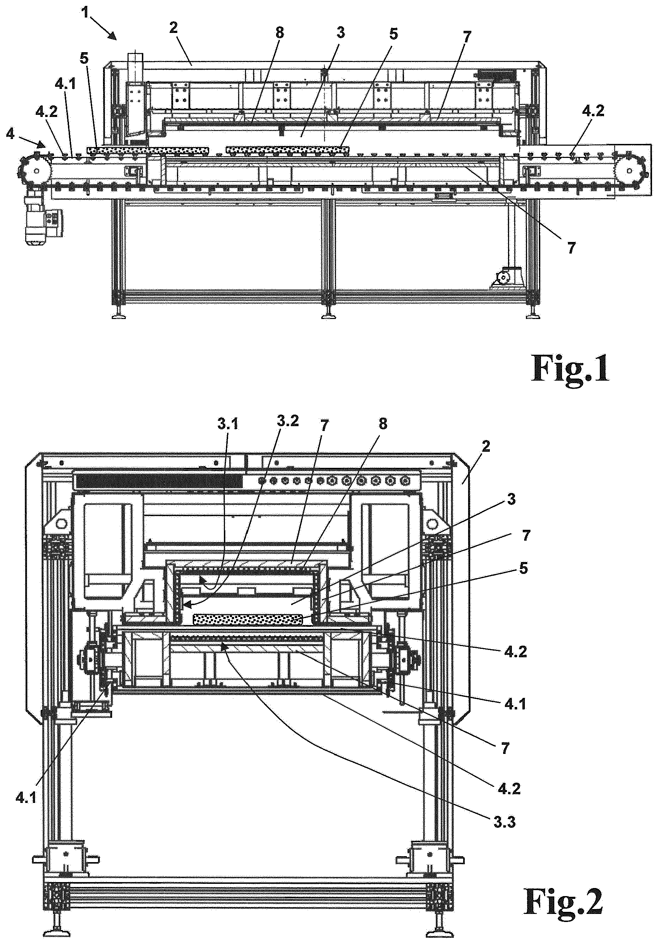

**Figur 1** zeigt einen Längsschnitt eines Durchlaufofens im Sinne der erfindungsgemäßen Vorrichtung zur Wärmebehandlung, dem insgesamt, die Bezugsziffer 1 zugeordnet ist. Die Vorrichtung 1 besteht aus einem Ofen-Gehäuse 2, in dem sich ein in Figur 2 näher dargestellter Prozessraum 3 zur Wärmebehandlung befindet, und einem Transportsystem 4 zum kontinuierlichen Transport von Behandlungsgut 5 durch den Prozessraum 3. Das Transportsystem 4 - hier durch die Längsschnitt-Abbildung nur zum Teil sichtbar - umfasst zwei parallel in einem Abstand voneinander liegende Endlos-Transportbänder 4.1 mit den Abstand zwischen den Transportbändern überbrückenden und darauf drehfest gehaltenen Trägerelementen in Form von transparenten Zwillingsrohren 4.2 aus Quarzglas, auf die das Behandlungsgut 5 zur Wärmebehandlung gelagert werden kann.

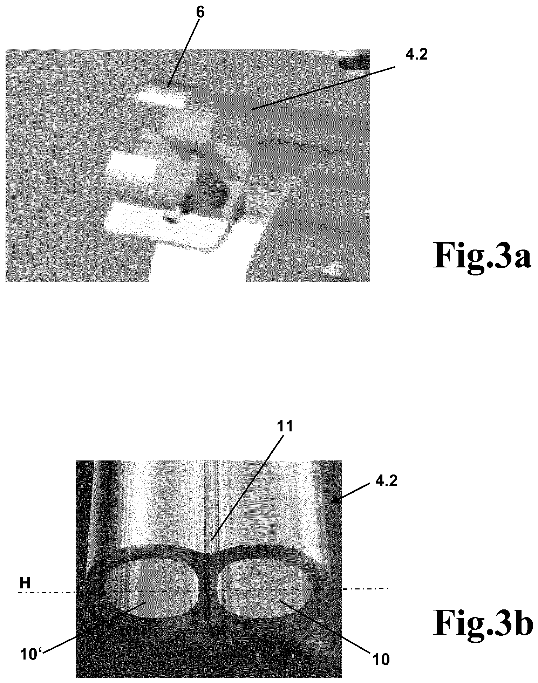

Eine Detailansicht der drehfesten Halterung der Zwillingsrohre 4.2 ist in der **Figur 3a** dargestellt. Eine Klemmfeder 6 umfasst das Ende eines Zwillingsrohres 4.2 und fixiert es in einer drehfesten Position an einem der Transportbändern (hier nicht dargestellt). Die Klemmfeder 6 ist mit Winkeln verbunden, die wiederum an dem einem der Transportbänder 4.1 befestigt ist.

Eine Detailansicht der Querschnittsgeometrie einer Zwillingsrohres 4.2 zeigt **Figur 3b.** Zwillingsrohre weisen eine Doppelrohr-Geometrie auf, die von zwei parallelen rohrförmigen Kompartments 10, 10' gebildet werden, die durch einen Zwischen-steg 11 getrennt sind. Der radiale Querschnitt zeigt die Form ähnlich einer Acht. Als Breite eines Zwillingsrohres wird das Außenmaß der beiden Kompartments 10, 10' angegeben, wenn im radialen Querschnitt die beiden Längsachsen in einer Horizontalebene H liegen, also die Form einer liegenden Acht zeigen, wie in Figur 3b dargestellt.

Die einzelnen Zwillingsrohre 4.2 haben Abmessungen in Bezug auf Länge x Breite x Höhe (L x B x H) von 1.000 mm x 34 mm x 14 mm; die Wandstärke beträgt circa 2 mm. Der Abstand der Zwillingsrohre 4.2 voneinander variiert je nach Gewicht und Geometrie des Behandlungsgutes 5. Für die Verwendung der erfindungsgemäßen Vorrichtung 1 zum Einbrennen einer Goldschicht auf Quarzglasrohre für die Lampenfertigung wird üblicherweise ein Abstand von 150 mm zwischen den Zwillings-Trägerrohren eingestellt. Die eingesetzten Zwillingsrohre 4.2 sind geeignet, Behandlungsgut 5 mit hohem Eigengewicht zu tragen und auch unter großer Hitzeeinwirkung sicher durch den Durchlaufofen zu transportieren. Die beiden Transportbänder 4.1 verlaufen außerhalb des beheizten Bereiches und werden erforderlichenfalls noch mit einem Luftstrom gekühlt. Das Gehäuse weist einen Ausschnitt auf, der die Durchgangshöhe und Durchgangsbreite für das Behandlungsgut 5 festlegt.

In **Figur 2** ist eine Querschnittsansicht der erfindungsgemäßen Vorrichtung 1 mit Blick in den Prozessraum 3 dargestellt. Der Prozessraum 3 ist von einer einlagigen thermischen Isolierung 7 im Decken-, Seiten- und Bodenbereich umgeben. Die Isolierung 7 besteht aus einer feuerfesten Hochtemperaturmatte auf der Basis von Aluminium- und Siliziumoxid; sie weist eine Dicke von 25 mm auf. Innerhalb der thermischen Isolierung 7 ist der Prozessraum 3 mit einer Auskleidung durch Heizelemente in Form von Infrarot-Heizstrahlern 8 versehen. Der Prozessraum 3 weist eine Länge von 2.000 mm, eine Breite von 420 mm und eine Höhe (gerechnet von der Ebene der Zwillingsrohre 4.2 des Transportsystems) von 145 mm auf. Die Heizstrahler 8 haben als Zwillingsrohr ausgebildete Hüllrohre aus Quarzglas, die eine dem Prozessraum 3 zugewandte und eine dem Prozessraum 3 abgewandte Seite aufweisen, und die über eine SiO₂-haltige Verbindungsmasse miteinander verbunden sind. Die Heizstrahler weisen an ihrer dem Prozessraum abgewandten Seite eine opake, hoch reflektive Beschichtung aus Quarzglas auf, die aus der gleichen SiO₂-Verbindungsmasse besteht, die auch die Heizstrahler 8 miteinander verbindet. Die Beschichtung besteht aus sehr vielen und kleinen Quarzkügelchen mit einem Durchmesser von circa 10 Nanometern bis 50 Mikrometern. Das fest gesinterte und entsprechend poröse SiO₂-Material, dessen Poren mit Luft gefüllt sind, besitzt aufgrund der winzigen Strukturen eine enorme Oberfläche: pro Gramm des Materials etwa 5 m². Diese große Oberfläche fördert die schnelle indirekte Erwärmung der Luft in den Poren über die direkte Erwärmung des Quarzglases über Infrarotstrahlung.

Derartig beschichtete und gegebenenfalls auch miteinander verbundene Heizstrahler 8 befinden sich an der Decke 3.1 des Prozessraumes 3. In jedes der Zwillingsrohre der Heizeinrichtung ist ein Heizdraht (Filament) eingezogen. Die Enden der Zwillingsrohre sind mit einem Keramiksockel abgeschlossen. Die elektrische Leistung der Filamente ist so ausgelegt, dass sich eine Flächenleistung von 100 kW/m² für die Heizstrahler 8 an der Decke 3.1 ergibt.

Die Heizstrahler 8 sind jeweils nebeneinander und wechselweise mit Zwillingsrohren ohne Heizfilament mit der dem Prozessraum 3 zugewandten bzw. abgewandten Seite zueinander angeordnet. Die Zwillingsrohre ohne Heizfilament haben auch die Reflexionsschicht aus Quarzglas, hier jedoch an ihrer dem Prozessraum zugewandten Seite. Auf diese Weise liegt jeweils ein Heizstrahler 8 einem Zwillingsrohr ohne Heizfilament gegenüber, das durch die Reflexionsschicht an der dem Prozessraum 3 zugewandten Seite die vom Heizstrahler 8 emittierte Infrarot-Strahlung reflektiert. Diese Anordnung ergibt ein optimales, homogenes Wärmeprofil im Prozessraum.

Grundsätzlich können auch an den Seitenwänden 3.2 und am Boden 3.3 Heizstrahler in der Art wie an der Decke vorgesehen sein. Bei dem hier dargestellten Prozessraum 3 sind die Heizstrahler 8 an der Decke 3.1 ausreichend, so dass an den Seitenwänden 3.2 und am Boden 3.3 des Prozessraumes 3, unterhalb der Trägerelemente des Transportsystems 4 Zwillingsrohre ohne Heizfilament angeordnet sind. Diese Zwillingsrohre sind mit einer Reflexionsschicht aus Quarzglas an ihrer dem Prozessraum 3 zugewandten Seite versehen und reflektieren somit die von den Heizstrahlern 8 emittierte und vom Behandlungsgut 5 und/oder von den Zwillings-Trägerrohren 4.2 des Transportsystems 4 reflektierte Infrarot-Strahlung. Diese Anordnung trägt zu einer Optimierung des homogenen Wärmeprofils im Prozessraum bei.

Die erfindungsgemäße Vorrichtung 1 wird als Durchlaufofen (elektrische Dauerleistung 20 kW) betrieben und für einen kontinuierlichen Sinterprozess eingesetzt. Hierzu werden auf der Oberseite mit Gold beschichtete Bauteile, beispielsweise Quarzrohre mit den Abmessungen L x B x H = 1.000 x 34 x 14 mm, zum Einbrennen der Beschichtung auf die Zwillingsrohre 4.2 des Transportsystems 4 aufgelegt und mit der Geschwindigkeit von 200 mm/min durch den heißen Prozessraum 3 geführt. Es werden 10 Rohre nebeneinander aufgelegt, so dass sich ein Durchsatz von etwa 100 Rohre pro Stunde ergibt. Die Vorrichtung 1 weist eine Durchgangshöhe von 100 mm und eine Durchgangsbreite von 420 mm auf.

Nach dem Durchlaufen der Vorrichtung 1 weist die Beschichtung auf den Rohren eine visuell homogene Oberfläche mit sehr guter Oberflächenhaftung auf. Die Haftung des Goldes auf der Oberfläche wird mit dem Klebeband- Abrisstest ermittelt. Dieser Test beinhaltet, dass ein im Handel frei erhältliches Klebeband, zum Beispiel ein Scotch-Klebeband der Firma 3M, auf die vergoldete Oberfläche aufgebracht und mit einem Ruck wieder abgezogen wird. Ist die Haftfähigkeit des Goldes nicht ausreichend, bleiben metallische Rückstände auf der Klebefläche des Bandes zurück. Die metallisch beschichtete Oberfläche zeigte keinerlei Beeinträchtigungen durch Partikel oder Fremdstoffe, da bei der erfindungsgemäßen Vorrichtung 1 keine beweglichen Trägerelemente eingesetzt werden, die durch Reibung an dem Behandlungsgut 5 oder an anderen Flächen Partikel freisetzen könnten. Überdies weist der Prozessraum 3 im Wesentlichen Oberflächen aus Quarzglas auf, so dass auch in diesem Bereich kontaminationsfrei und ohne Partikelgenerierung gearbeitet wird.

Sofern in den Figuren 1 bis 3 dieselben Bezugsziffern verwendet sind, so sind damit baugleiche oder äquivalente Bauteile und Bestandteile bezeichnet, wie sie anhand der Beschreibung zu Figur 1 näher erläutert sind.

## Patentansprüche

1. Vorrichtung zur Wärmebehandlung, umfassend mindestens ein in einem langgestreckten Gehäuse (2) angeordneter Prozessraum (3) mit einer Heizeinrichtung und mit einem Transportsystem (4) zum kontinuierlichen Transport von Behandlungsgut (5) durch den Prozessraum (3), wobei das Transportsystem (4) zwei parallel in einem Abstand voneinander liegende Endlos-Transportbänder (4.1) mit einer Vielzahl von den Abstand zwischen den Transportbändern überbrückenden und darauf sich abstützenden Zylindern aus Quarzglas aufweist, auf die das Behandlungsgut (5) zur Wärmebehandlung gelagert ist, **dadurch gekennzeichnet, dass** die Zylinder als Zwillingsrohre (4.2), gebildet von zwei rohrförmigen, durch einen Zwischensteg (11) voneinander getrennten und jeweils eine Längsachse aufweisende Kompartments (10; 10'), ausgeführt und an ihren Enden mit den Transportbändern (4.1) drehfest verbunden sind.

2. Vorrichtung nach Anspruch 1, **dadurch gekennzeichnet, dass** die Zwillingsrohre (4.2) auf den Transportbändern (4.1) derart montiert sind, dass die Längsachsen in einer gemeinsamen Horizontalebene (H) liegen.

3. Vorrichtung nach Anspruch 1, **dadurch gekennzeichnet, dass** die Zwillingsrohre (4.2) auf den Transportbändern (4.1) derart montiert sind, dass die Längsachsen in einer gemeinsamen Vertikalebene liegen.

4. Vorrichtung nach einem der Ansprüche 1 bis 3, **dadurch gekennzeichnet, dass** die Zwillingsrohre (4.2) in Klemmfedern (6) gehalten werden, die jeweils mit einem Transportband (4.1) verbunden sind.

5. Vorrichtung nach einem der vorhergehenden Ansprüche 1 bis 4 **dadurch gekennzeichnet, dass** die Zwillingsrohre (4.2) mindestens teilweise eine Beschichtung aus opakem, hoch reflektivem Quarzglas aufweisen.

6. Vorrichtung nach einem der vorhergehenden Ansprüche 1 bis 5, **dadurch gekennzeichnet, dass** der Prozessraum (3) eine Auskleidung aus Infrarot-Heizstrahlern (8) mit als Zwillingsrohren ausgebildeten Hüllrohren aus Quarzglas umfasst, die eine dem Prozessraum zugewandte und eine dem Prozessraum abgewandte Seite aufweisen, und die über eine SiO₂-haltige Verbindungsmasse miteinander verbunden sind.

7. Vorrichtung nach Anspruch 6, **dadurch gekennzeichnet, dass** die SiO₂-haltige Verbindungsmasse gleichzeitig als Reflektor und als Verbindungsmittel dient.

8. Vorrichtung nach Anspruch 6 oder 7, **dadurch gekennzeichnet, dass** die SiO₂-haltige Verbindungsmasse auf die dem Prozessraum (3) zugewandten Seite des Infrarot-Heizstrahlers (8) aufgebracht ist.

9. Vorrichtung nach Anspruch 6 oder 7, **dadurch gekennzeichnet, dass** die SiO₂-haltige Verbindungsmasse auf die dem Prozessraum (3) abgewandten Seite des Infrarot-Heizstrahlers (8) aufgebracht ist.

10. Vorrichtung nach einem der Ansprüche 6 bis 9, **dadurch gekennzeichnet, dass** die Infrarot-Heizstrahler (8) Heizfilamente aufweisen, die eine Gesamtflächenleistung der Heizeinrichtung im Bereich von 80 kW/m² bis 120 kW/m² ergeben.

11. Verwendung der Vorrichtung nach einem der Ansprüche 1 bis 10 zur Herstellung von Glasbauteilen mit einer Gold-Schicht, insbesondere einer Gold-Reflektorschicht.

## Claims

1. A device for heat treatment, comprising at least one process chamber (3) arranged in an elongated housing (2) and having a heating device and a transport system (4) for continuously transporting material to be treated (5) through the process chamber (3), wherein the transport system (4) has two parallel spaced apart endless conveyor belts (4.1) having a plurality of fused quartz glass cylinders bridging the spacing between the conveyor belts and being supported thereon, with the material to be treated (5) being seated on said cylinders for heat treatment, **characterised in that** the cylinders are designed as twin tubes (4.2) which are formed by two tubular compartments (10; 10') that are separated from each other by an intermediate web (11) and each have a longitudinal axis, said cylinders being non-rotatably connected to the conveyor belts (4.1) at their ends.

2. The device in accordance with Claim 1, **characterised in that** the twin tubes (4.2) are mounted on the conveyor belts (4.1) in such a manner that the longitudinal axes are located in a common horizontal plane (H).

3. The device in accordance with Claim 1, **characterised in that** the twin tubes (4.2) are mounted on the conveyor belts (4.1) in such a manner that the longitudinal axes are located in a common vertical plane.

4. The device in accordance with any one of Claims 1 to 3, **characterised in that** the twin tubes (4.2) are held in clamping springs (6) which are each connected to a conveyor belt (4.1).

5. The device in accordance with any one of Claims 1 to 4, **characterised in that** the twin tubes (4.2) have a coating made of opaque highly reflective fused quartz glass at least in certain regions.

6. The device in accordance with any one of Claims 1 to 5, **characterised in that** the process chamber (3) comprises a lining made of infrared radiators (8) with fused quartz glass cladding tubes configured as twin tubes, which have a side facing the process chamber and a side facing away from the process chamber and which are connected to each other by a compound mass containing SiO₂.

7. The device in accordance with Claim 6, **characterised in that** the compound mass containing SiO₂ at the same time serves as a reflector and as a connecting means.

8. The device in accordance with Claim 6 or 7, **characterised in that** the compound mass containing SiO₂ is applied onto the side of the infrared radiator (8) facing the process chamber (3).

9. The device in accordance with Claim 6 or 7, **characterised in that** the compound mass containing SiO₂ is applied onto the side of the infrared radiator (8) facing away from the process chamber (3).

10. The device in accordance with any one of Claims 6 to 9, **characterised in that** the infrared radiators (8) have heating filaments which result in a total area output of the heating device within a range from 80 kW/m² to 120 kW/m².

11. Use of the device in accordance with any one of Claims 1 to 10 for manufacturing glass components having a gold coating, more particularly a gold reflector coating.

## Revendications

1. Dispositif de traitement thermique, comprenant au moins un espace de processus (3) disposé dans un logement étiré en longueur (2) avec un dispositif de chauffage et avec un système de transport (4) pour le transport continu de marchandise de traitement (5) à travers l'espace de processus (3), dans lequel le système de transport (4) présente deux bandes transporteuses sans fin (4.1) situées parallèlement à une distance l'une de l'autre avec une pluralité de cylindres en verre de quartz couvrant la distance entre les bandes transporteuses et s'appuyant sur celles-ci, sur lesquels la marchandise de traitement (5) est logée pour le traitement thermique, **caractérisé en ce que** les cylindres sont conçus en tant que tubes jumeaux (4.2), formés de deux compartiments tubulaires (10 ; 10') séparés l'un de l'autre par une entretoise intermédiaire (11) et présentant chacun un axe longitudinal, et connectés à leurs extrémités de manière fixe en rotation aux bandes transporteuses (4.1).

2. Dispositif selon la revendication 1, **caractérisé en ce que** les tubes jumeaux (4.2) sont montés sur les bandes transporteuses (4.1) de telle sorte que les axes longitudinaux se situent dans un plan horizontal commun (H).

3. Dispositif selon la revendication 1, **caractérisé en ce que** les tubes jumeaux (4.2) sont montés sur les bandes transporteuses (4.1) de telle sorte que les axes longitudinaux se situent dans un plan vertical commun.

4. Dispositif selon une des revendications 1 à 3, **caractérisé en ce que** les tubes jumeaux (4.2) sont maintenus dans des ressorts de friction (6) qui sont chacun connectés à une bande transporteuse (4.1).

5. Dispositif selon une des revendications précédentes 1 à 4, **caractérisé en ce que** les tubes jumeaux (4.2) présentent au moins partiellement un revêtement en verre de quartz opaque, hautement réflecteur.

6. Dispositif selon une des revendications précédentes 1 à 5, **caractérisé en ce que** l'espace de processus (3) comprend une garniture d'émetteurs chauffants à infrarouge (8) avec des tubes d'enveloppe en verre de quartz réalisés en tant que tubes jumeaux qui présentent un côté tourné vers l'espace de processus et un côté détourné de l'espace de processus, et qui sont connectés les uns aux autres par le biais d'une masse de connexion contenant du SiO₂.

7. Dispositif selon la revendication 6, **caractérisé en ce que** la masse de connexion contenant du SiO₂ sert simultanément de réflecteur et de moyen de connexion.

8. Dispositif selon la revendication 6 ou 7, **caractérisé en ce que** la masse de connexion contenant du SiO₂ est appliquée sur le côté tourné vers l'espace de processus (3) de l'émetteur chauffant à infrarouge (8).

9. Dispositif selon la revendication 6 ou 7, **caractérisé en ce que** la masse de connexion contenant du SiO₂ est appliquée sur le côté détourné de l'espace de processus (3) de l'émetteur chauffant à infrarouge (8).

10. Dispositif selon une des revendications 6 à 9, **caractérisé en ce que** les émetteurs chauffants à infrarouge (8) présentent des filaments chauffants qui produisent une puissance superficielle totale du dispositif de chauffage dans la région de 80 kW/m² à 120 kW/m².

11. Utilisation du dispositif selon une des revendications 1 à 10 pour la fabrication de composants en verre avec une couche d'or, notamment une couche réflectrice d'or.
